# EUROPEAN PATENT SPECIFICATION

(11) **EP 2 475 620 B1**
(45) Date of publication and mention of the grant of the patent: **06.11.2013**
(21) Application number: 10766305.6
(22) Date of filing: 03.09.2010
(51) Int. Cl.: C02F 1/44, B01D 61/08, B01D 61/18, B01D 63/02, C02F 1/28

(54) **A WATER CONTAINER**
WASSERBEHÄLTER
RÉCIPIENT À EAU

(30) Priority: 07.09.2009 GB 0915539
(43) Date of publication of application: 18.07.2012
(73) Proprietor: Pritchard IP Limited, Colchester, Essex CO3 3BZ (GB)
(72) Inventor: Pritchard, Michael, Ipswich, Suffolk IP4 2HE (GB)
(74) Representative: Finnie, Peter John
(86) International application number: PCT/GB2010/001676
(87) International publication number: WO 2011/027125

(56) References cited:
- DE-U1-202005 014 809
- JP-A- 5 146 778
- JP-A- 10 314 726
- JP-U- H0 737 394
- US-A- 4 609 106
- US-A- 4 636 307
- US-A- 4 969 922
- US-A- 5 667 113
- US-A1- 2007 045 169

## Description

### Field of the Invention

The present invention relates to a water container for removing impurities from water to provide sterile, safe drinking water.

### Background to the Invention

Water is heavy. Delivering it over even short distances is time consuming and expensive. It requires long logistic chains to maintain supplies. This problem is acutely evident during military or humanitarian operations

If personnel choose to drink water from the surrounding environment they run the risk of becoming struck down by disease through the ingestion of bacteria or viruses living naturally in the water.

Our published International patent application WO2008/037969 discloses a water bottle having a water filter which removes sediments and other deposits from the water and has a retention of greater than log 6 (99.9999%) of bacteria, cysts, parasites and fungi, and greater than log 4 (99.99%) of viruses from the water.

Some other examples of relevant prior art comprise US 4 636 307, JP 5 146 778, JP 10314726 and JP 407 37 394.

One well known container used to carry larger volumes of water is the ubiquitous "jerrycan", originally designed at the outbreak of World War II, and much copied since. Although originally manufactured from pressed steel, modern jerrycans are now typically manufactured from plastics in various sizes from 5L to 20L. Jerrycans are still used extensively by the military and aid agencies to carry clean supplies of water to locations where it is needed.

### Summary of the Invention

According to the present invention, there is provided a jerrycan for holding water as defined in claim 1.

The container is a jerrycan, preferably having a capacity of between 5 and 20 litres. The jerrycan is preferably made from plastic materials, and in particular, water-grade high-density polyethylene (HDPE). Plastic jerrycans can be made using techniques well known in the art, such as rotational moulding or blow moulding. However, metal jerrycans are also envisaged as being suitable for use. In addition, the present invention can be applied to larger water vessels such as water butts.

The at least one brace member consists of a hollow tube which is integral to the sidewall portions of the container housing. As such, in addition to providing structural reinforcement to the housing to resist deformation when under load, particularly when the container is pressurised with air, the one or more internal brace members may function to enable the container of the invention to be attached to load carriage systems. Each hollow tube forms an open channel connecting opposing sidewall portions through which it is envisaged support rods or the like can be inserted. Such rods may for example function as a wheel axle, allowing the container to transported on wheels.

Preferably, one or more sidewalls of the container housing comprise a pattern of indentations to provide enhanced structural rigidity at selected locations, thereby to resist deformation of the sidewalls when under load. These indentations may be configured to provide channels for receiving strapping applied around the circumference of the container.

The housing further comprises a base having a plurality of flat feet. The base has pitched portions to resist deformation of the base. The one or more sidewalls and the top wall may also include pitched portions. The pitched portions in the base and side walls provide further structural reinforcement to enable to the container housing to resist deformation under load.

Preferably, the means for establishing a pressure differential comprises a pump. More preferably, the pump is a manually operated pump. Preferably, the pump is a piston pump comprising a non-return valve through which air may be passed into the container, and a piston shaft through which a piston head may be moved such that air is passed through the non-return valve.

In one preferred embodiment, the pump is removable from the device to allow the liquid reservoir to be refilled.

As an alternative to a pump, the container may simply comprise a pressure valve for connection to a separate source of pressurised gas.

Preferably, the container further comprises a pressure regulator. For example, the pressure regulator may include a release valve adapted to release water and/or air if the pressure in the container exceeds a predetermined level.

Preferably, the output valve is a tap. Preferably, the tap has an external spout that is angled downwards to promote the flow of any water remaining in the spout after the tap has been closed. Optionally, the external spout may comprise a hose fitting for receiving a removable water hose pipe.

Preferred water filters for use with the present invention are suitable for ultrafiltration, that is to remove all particles of a size greater than 0.01 microns. In another preferred embodiment the filter is suitable for nanofiltration or reverse osmosis. Reverse osmosis filters are capable of removing everything (including salts and oils) apart from pure water (H₂O) from a liquid. Nanofiltration removes particles of a size greater than 0.001 microns (including aqueous salts).

Water is passed through the water filter under a pressure differential. This allows the water to be passed through finer filters than would be possible if the container were not pressurised.

A pore size of less than or equal to 25 nanometres is sufficient to remove most microbiological matter from the liquid, including viruses, thereby providing safe drinking water and a far more effective portable water filtration system than has previously been available. However, for additional security, preferred embodiments of the invention have a pore size of less than or equal to 20 nanometres, and more preferably have a pore size of less than or equal to 15 nanometres.

As is known in the art, the pore size of a material is in fact an average of the individual sizes of the pores (or holes) in the material, since it is inevitable that any material comprising a large number of pores will include some variation in these individual sizes. Preferred filters for use in the present invention have a tightly defined distribution of pore sizes such that the difference between the maximum pore size and the average pores size is minimized. Preferably, the standard deviation of the pore size distribution is less than 30% of the average pore size, and more preferably is less than 15% of the average pore size. In preferred embodiments of the invention, the filter has a maximum pore size of less than or equal to 30 nanometres, more preferably, less than or equal to 25 nanometres, and most preferably less than or equal to 20 nanometres. In other embodiments, the maximum pore size may be even lower in order to perform nanofiltration or reverse osmosis, for example.

Preferably, the water container of the present invention will filter water with a pressure differential of any size. For example, the operating pressure differential of a preferred embodiment is preferably greater than 10 kPa, more preferably in the range of 50 kPa-1500 kPa, more preferably in the range of 100 kPa-1000 kPa, more preferably 150 kPa-300 kPa.

The water filter of the present invention is preferably a membrane filter. It preferably comprises at least one hydrophilic membrane. Hydrophilic membranes are attractive to water and therefore water is passed through them in preference to other liquids and to gases. In this way, not only is the filtration offered by the preferred embodiments improved, but it is possible to use the filter even when it is not completely immersed in the liquid.

Preferably, the membranes are capillary hollow fibre membranes. These membranes act to filter the water as only particles smaller than their pore size may pass through them. The fibre membranes may incorporate carbon or other chemical elements, or reverse osmosis membranes. A combination of different types of filter membranes may be included in the filter. These may include ultrafiltration, nanofiltration and reverse-osmosis membranes.

Once water enters through the wall of a capillary membrane under the influence of a pressure differential it is transferred along its tube-like structure to the output. As a result, water may enter at any point along the membrane wall and reach the output while also being filtered.

Preferably, the filter lies substantially along an entire length of the container housing, ensuring that any water is in contact with the membranes. Preferably, the filter lies along over 70% of said length of the container, more preferably over 80%, more preferably over 90%. This means that when a pressure differential exists between the inside of the container housing and the outside atmosphere across the walls of the housing, and the output valve is open, water in the container will pass through the filter to the output valve substantially regardless of the orientation of the device. Preferably, the water filter comprises an annular housing having an outer wall having a plurality of holes therethrough. In one preferred embodiment of the present invention the filter is substantially cylindrical. Preferably, the holes are distributed across substantially the whole length of the filter.

The filter is preferably removable from the container. This allows the filter to be cleaned and replaced as required.

### Brief Description of the Drawings

An example of the present invention will now be described in detail with reference to the accompanying drawings, in which:
Figure 1 is a perspective view of a jerrycan with a partial cutaway section;
Figure 2 is a sectional view of the jerrycan of Figure 1;
Figure 3 is a top elevation of the jerrycan of Figure 1;
Figure 4 is an end elevation of the jerrycan of Figure 1; and,
Figure 5 is a partial view of the base of the jerrycan of Figure 1.

### Detailed Description

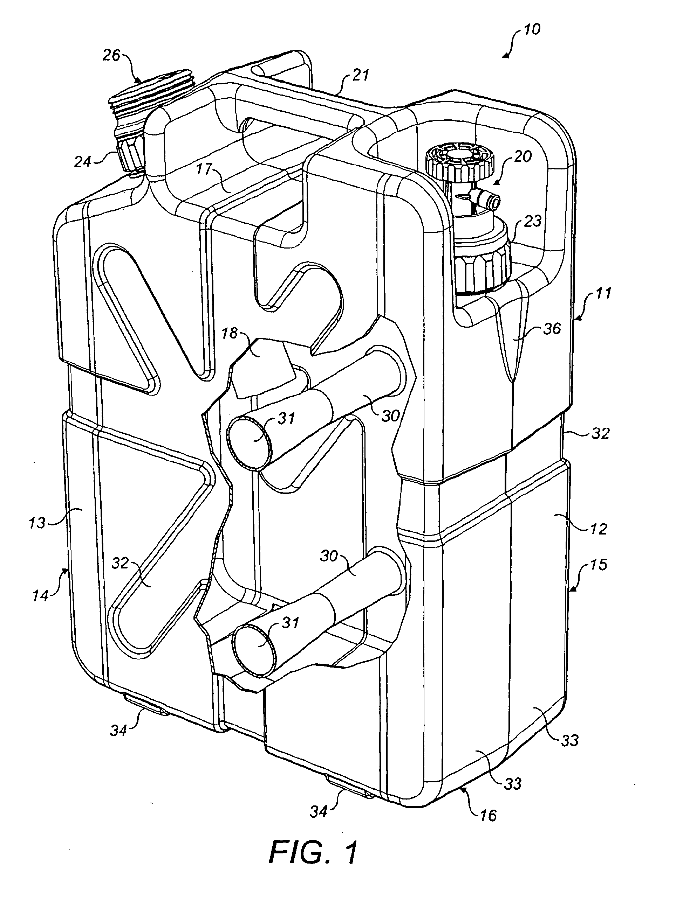

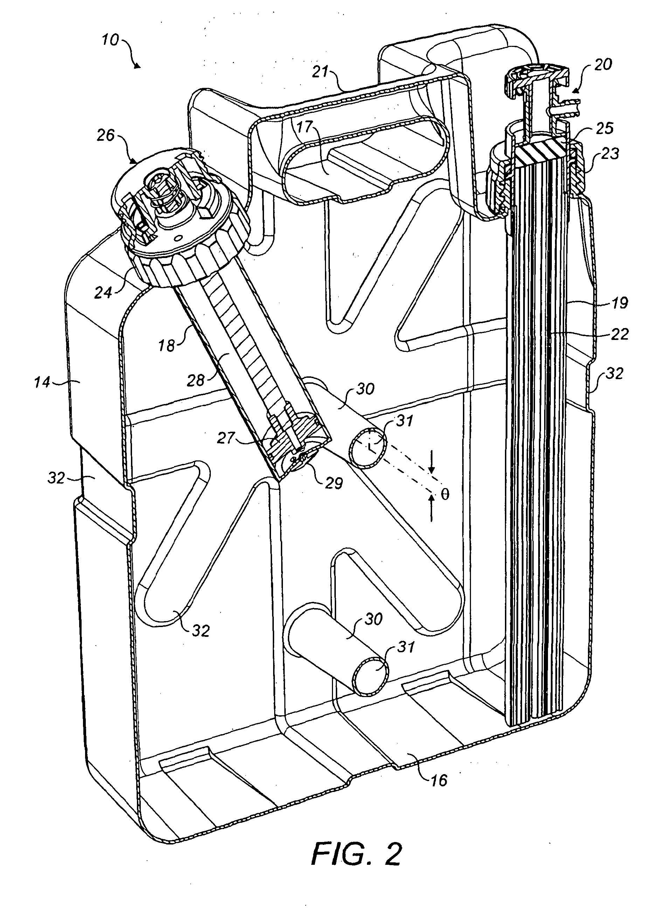

Figures 1 and 2 show a jerrycan 10 designed in accordance with the present invention. The jerrycan 10 comprises a container housing 11 having four sidewalls 12-15, a base 16 and a top 17. The jerrycan 10 includes a manual pump unit 18 and a water filter cartridge 19 disposed within the housing 11, together with an externally mounted tap 20 coupled to the water filter cartridge 19. A carrying handle 21 is integrally formed with the top 17. When constructed the jerrycan 10 is sealed and is both water- and air-tight.

The water filter cartridge 19 is preferably of the type described in International patent application number PCT/GB2007/003623 (international publication number WO2008/037969) filed on 25 September 2007. Filters of this type are made from a matrix of hollow fibre membranes 22 which typically have a mean pore size which is capable of ultra-filtration. As such, the filter cartridge 19 is effective to remove bacteria, viruses, cysts, parasites, fungi and all otherwater-born pathogens. In fact, such a filter removes all microbiological matter from the water to provide safe, sterile drinking water.

The preferred fibre membranes 22 used in preferred embodiment of the present invention have a retention of greater than log 6 (99.9999%) of bacteria, cysts, parasites and fungi, and greater than log 4 (99.99%) of viruses from the water. The fibre membranes 22 also remove sediments and other deposits from the water.

The manual pump unit 18 provides the required pressure differential across the walls of the jerrycan 10 to drive water through the walls of the hollow fibre membranes 22 and thereafter along the length of the fibre membranes 22 to their open ends at the tap 20 when the tap 20 is opened.

Providing a water filter cartridge 19 such as that described above allows the user to use water from a wide range of sources, including open sources of water, that is effectively rendered safe to drink.

Fibre membranes suitable for use with the present invention are available commercially, for example X-flow (TM) capillary membranes from Norit (www.norit.com) may be used. This hollow fibre ultra-filtration membrane 22 is effective to screen all turbidity, bacteria as well as viruses.

The water filter cartridge 19 abuts the base 16 and is removably attached to the top of the container 10 by a screw cap compression fitting 23. An advantage of this architecture is that, although fully sealed when in place, the water filter cartridge 19 may be removed for cleaning or replacement at any time. In this way, the entire jerrycan 10 need not be replaced if the water filter cartridge 19 becomes damaged in some way.

The manual pump unit 18 shown in the Figures is preferably of the type described in detail in International patent application number PCT/GB2007/003623 (International publication number WO2008/037969) filed on 25 September 2007. It is attached to the jerrycan 10 by a screw cap compression fitting 24 to ensure a fluid tight seal. Like the water filter cartridge 19, the entire pump unit 18 is designed to be removed from the jerrycan 10.

The pump shown in this preferred embodiment is a simple 1:1 pump, in that the pressure that the user must overcome to actuate the pump is equal to the pressure in the container. Nevertheless, it is possible to use ratcheting, or gearing, systems in accordance with the pump of the present invention. These mechanisms allow easier hand actuation of the pump 18 (and consequently enable to pressure inside the container to be increased to a greater level than would otherwise be possible).

The jerrycan 10 also incorporates an additional carbon filter 25 through which water can pass before leaving through the tap. Carbon filters are known to be effective in the removal of chemicals from water. The carbon filter 25 used in the preferred embodiment is an active carbon filter, although other types of carbon-based filters (such as charcoal filters) may be adopted.

In order to remove impurities from water, the pump 18 is removed from the container housing 11 and untreated water is poured into the jerrycan 10. The pump 18 is then re-attached to the container housing 11 and the pump handle 26 is unlocked and repeatedly moved from a withdrawn position to a closed position thereby moving the piston head 27 up and down through the piston shaft 28. This has the effect of forcing air through a non-return valve 29, thereby increasing the pressure within the container 11. When the user opens the tap 20, the internal pressure forces the water through the hollow tube membranes 22 within the water filter cartridge 19 and ultimately out of the container 11 through the tap 20 for the user to collect.

The housing 11 further comprises a notch 36 located below the tap, which enables easy filing of other containers, such as standard army issue water bottles and other water carrying devices, with dean water from the jerrycan 10.

The jerrycan 10 has a number of internal brace members 30 that extend between opposing sidewall portions 13,15 of the container 11 to provide enhanced resistance to deformation of the container walls when loaded with water and pressurised with air. As shown, each brace member 30 consists of a hollow tube 31 which is integral to the sidewall portions 13,15 of the container housing 11. The hollow tube 31 is profiled in a fluted manner with a pitch angle θ of 5°. This shape is akin to a three-dimensional arch shape. The fluting design disperses the load evenly, in order to disperse the stress across a greater surface area, thereby enhancing the rigidity provided by the brace member. The pitch angle can be selected according to requirements.

The hollow brace members 30 enable the jerrycan 10 to be attached to load carriage systems. In particular, each hollow tube 31 provides an open channel connecting opposing sidewall portions 13,15 through which it is envisaged support rods or the like can be inserted. Such rods may for example function as a wheel axle, allowing the container to be transported on wheels.

The sidewalls 12-15 of the container housing 11 are formed with a pattern of indentations 32 to provide enhanced structural rigidity at selected locations, thereby resisting deformation of the sidewalls when under load. These indentations 32 are configured to provide channels for receiving strapping applied around the circumference of the container 11 (not shown).

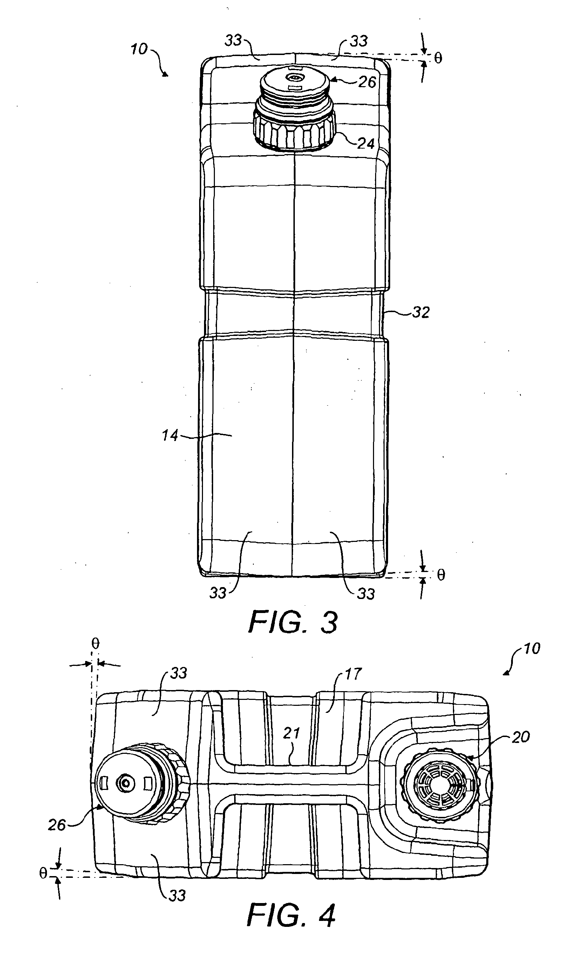

As shown in Figures 3 and 4, the end walls 12,14 and the top wall 17 include pitched portions 33. The pitched portions 33 provide further structural reinforcement to enable to the container housing 11 to resist deformation under load, particularly when a pressure differential has been established across the walls of the container. These pitch angles θ in this example are between 3° and 7°, but again, these can be varied according to requirements. These pitch angles also allow for the jerrycan 11 to be wedged into tight spaces, for example in a vehicle.

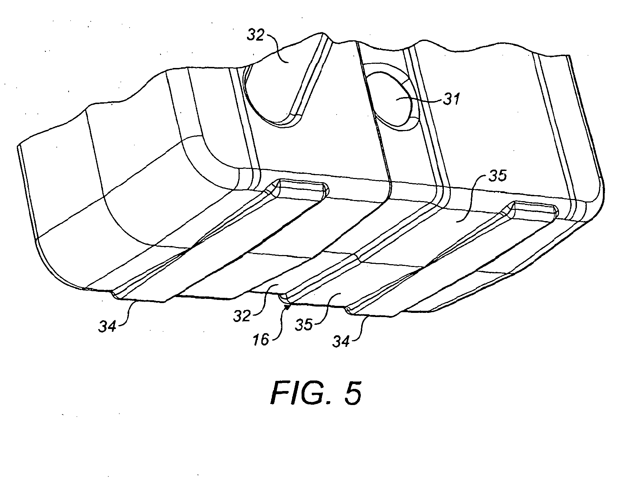

As shown in Figure 5, the base 16 has a number of flat feet 34 configured to resist deformation of the base 16. The base 16 has pitched portions 35 which also help resist deformation of the base 16 under load. Conventional jerrycans are formed with a recessed base which has been found to be susceptible to "blow out" when the jerrycan is pressurised so that the jerrycan can not remain upright. The jerrycan 10 of the present invention is designed such that the areas of the base that are most likely to deform under load are located above the level of the plurality of feet 34. The shape of the base 16 is designed to allow for an inevitable degree of expansion of the housing 11 under load, whilst resisting deformation of the feet 34 in order to prevent the jerrycan 10 from toppling over. The plurality of feet 34 in the configuration shown also aid the manufacture of the jerrycan 11. They are constructed in the line of draw and this reduces the complexity of the moulding tool required, thereby reducing the over cost of production.

## Claims

1. A jerrycan for holding water comprising:
a container housing for holding water having at least one internal brace member coupled between opposing sidewall portions of the walls of the container to resist deformation of the container housing, the at least one internal brace member consisting of a hollow tube which is integral to the sidewall portions of the walls of the container;
a base having a plurality of flat feet with pitched portions therebetween;
a water filter that extends into the container housing;
an output valve coupled to the water filter; and,
means for establishing a pressure differential across the walls of the container housing,
wherein the water filter comprises one or more membranes which are effective to pass water in preference to air under the influence of the pressure differential.

2. A jerrycan according to claim 1, in which the hollow tube has a fluted profile.

3. A jerrycan according to claim 1 or claim 2, in which the container has a capacity of between 5 and 20 litres.

4. A jerrycan according to any preceding claim, in which the container housing is made from water grade high-density polyethylene (HDPE).

5. A jerrycan according to any preceding claim, in which one or more sidewalls of the container housing comprise a pattern of indentations to provide enhanced structural rigidity at selected locations, thereby to resist deformation of the sidewalls when under load.

6. A jerrycan according to claim 5, in which the indentations are configured to provide channels for receiving strapping applied, in use, around the circumference of the container.

7. A jerrycan according to any preceding claim, in which one or more of the sidewalls and top wall has pitched portions to resist deformation.

8. A jerrycan according to any preceding claim, in which the means for establishing a pressure differential comprises a pump.

9. A jerrycan according to claim 8, in which the pump is removable to facilitate refilling of the container housing.

10. A jerrycan according to any of claims 1 to 7, in which the container comprises a pressure valve for connection to a separate source of pressurised gas.

11. A jerrycan according to any preceding claim, further comprising a pressure regulator.

12. A jerrycan according to any preceding claim, in which the output valve comprises a tap.

13. A jerrycan according to claim 12, in which the tap has an external spout that is angled downwards to promote the flow of any water remaining in the spout after the tap has been closed.

14. A jerrycan according to any preceding claim, in which the water filter is adapted to remove all particles of a size greater than 0.01 microns, and preferably greater than 0.001 microns.

15. A jerrycan according to any preceding claim, in which the water filter comprises at least one hydrophilic membrane,
preferably wherein the at least one membrane is a capillary hollow fibre membrane,
preferably wherein the filter lies substantially along the entire depth of the container housing, ensuring that any water is in contact with the membranes when the housing is in an upright position,
and preferably wherein the water filter is a removable cartridge.

## Patentansprüche

1. Kanister zur Aufbewahrung von Wasser, der Folgendes umfasst:
ein Behältergehäuse zur Aufbewahrung von Wasser, das wenigstens ein internes Verstrebungselement hat, das zwischen den gegenüberliegenden Seitenwandabschnitten der Wände des Behälters angekoppelt ist, um einer Deformierung des Behältergehäuses zu widerstehen, wobei das wenigstens eine interne Verstrebungselement aus einem hohlen Rohr besteht, das integral zu den Seitenwandabschnitten der Wände des Behälters ist,
ein Unterteil, das eine Vielzahl von flachen Füßen mit abgestimmten Abschnitten dazwischen hat,
ein Wasserfilter, das sich in das Behältergehäuse erstreckt,
ein Auslassventil, das am Wasserfilter angekoppelt ist, und
Mittel zum Nachweisen einer Druckdifferenz quer über die Wände des Behältergehäuses,
wobei das Wasserfilter eine oder mehrere Membranen umfasst, die zum Durchgang von Wasser in Bevorzugung zu Luft unter dem Einfluss der Druckdifferenz wirksam sind.

2. Kanister nach Anspruch 1, in dem das hohle Rohr ein gerilltes Profil hat.

3. Kanister nach Anspruch 1 oder Anspruch 2, in dem der Behälter ein Fassungsvermögen von zwischen 5 und 20 Litern hat.

4. Kanister nach einem vorangehenden Anspruch, wobei das Behältergehäuse aus einem Polyethylen hoher Dichte (HDPE) der Wasserklasse hergestellt wurde.

5. Kanister nach einem vorangehenden Anspruch, in dem eine oder mehrere Seitenwände des Behältergehäuses ein Muster von Eindrücken umfasst, um eine verbesserte strukturelle Steifigkeit an ausgewählten Positionen bereitzustellen, wobei eine Deformierung der Seitenwände unter Last verhindert wird.

6. Kanister nach Anspruch 5, in dem die Eindrücke so konfiguriert sind, dass sie Kanäle bereitstellen, um die angewandten Riemen aufzunehmen, die um den Umfang des Behälters herum verwendet werden.

7. Kanister nach einem vorangehenden Anspruch, in dem eine oder mehrere der Seitenwände und die obere Wand gerillte Abschnitte haben, um einer Deformierung zu widerstehen.

8. Kanister nach einem vorangehenden Anspruch, in dem die Mittel zur Schaffung einer Druckdifferenz eine Pumpe umfassen.

9. Kanister nach Anspruch 8, wobei die Pumpe zum Erleichtern des Nachfüllens des Behältergehäuses abnehmbar ist.

10. Kanister nach einem der Ansprüche 1 bis 7, wobei der Behälter ein Druckventil umfasst, das dem Anschluss an eine separate Quelle des unter Druck stehenden Gases dient.

11. Kanister nach einem vorangehenden Anspruch, der ferner einen Druckregler umfasst.

12. Kanister nach einem vorangehenden Anspruch, in dem das Auslassventil einen Hahn umfasst.

13. Kanister nach Anspruch 12, wobei der Hahn einen externen Ausguss hat, der nach unten abgewinkelt ist, um den Abfluss des Wassers, das im Ausguss verbleibt, nachdem der Hahn geschlossen wurde, zu unterstützen.

14. Kanister nach einem vorangehenden Anspruch, in dem das Wasserfilter so adaptiert ist, dass alle Teilchen einer Größe von mehr als 0,01 Mikron, und vorzugsweise von mehr als 0,001 Mikron, entfernt werden.

15. Kanister nach einem vorangehenden Anspruch, in dem das Wasserfilter wenigstens eine hydrophile Membran umfasst,
vorzugsweise, wenn die wenigstens eine Membran eine hohle Fasermembran eines Kapillarröhrchen ist,
vorzugsweise, wenn das Filter im Wesentlichen an der gesamten Tiefe des Behältergehäuses entlang liegt, und sicherstellt, dass Wasser mit den Membranen in Kontakt ist, wenn das Gehäuse in aufrechter Position ist,
und vorzugsweise, wenn das Wasserfilter eine auswechselbare Kartusche ist.

## Revendications

1. Jerrycan destiné à contenir de l'eau comportant :
un logement de contenant destiné à contenir de l'eau ayant au moins un élément de renfort interne accouplé entre des parties de parois latérales opposées des parois du contenant pour résister à toute déformation du logement de contenant, ledit au moins un élément de renfort interne consistant en un tube creux qui fait partie intégrante des parties de parois latérales des parois du contenant ;
une base ayant une pluralité de pieds plats avec des parties inclinées entre eux ;
un filtre à eau qui s'étend dans le logement de contenant ;
une vanne de sortie accouplée au filtre à eau ; et,
un moyen permettant d'établir une pression différentielle en travers des parois du logement de contenant,
dans lequel le filtre à eau comporte une ou plusieurs membranes qui servent à faire passer de l'eau de préférence à l'air sous l'influence de la pression différentielle.

2. Jerrycan selon la revendication 1, dans lequel le tube creux a un profil cannelé.

3. Jerrycan selon la revendication 1 ou la revendication 2, dans lequel le contenant a une capacité située entre 5 et 20 litres.

4. Jerrycan selon l'une quelconque des revendications précédentes, dans lequel le logement de contenant est réalisé à partir d'un polyéthylène haute densité (HDPE) de qualité alimentaire de type eau.

5. Jerrycan selon l'une quelconque des revendications précédentes, dans lequel une ou plusieurs parois latérales du logement de contenant comportent un motif d'indentations pour la mise en oeuvre d'une meilleure rigidité de la structure en des emplacements sélectionnés, pour ainsi résister à toute déformation des parois latérales sous l'effet d'une charge.

6. Jerrycan selon la revendication 5, dans lequel les indentations sont configurées pour la mise en oeuvre de profilés en U à des fins de réception d'un cerclage appliqué, lors de l'utilisation, autour de la circonférence du contenant.

7. Jerrycan selon l'une quelconque des revendications précédentes, dans lequel une ou plusieurs parmi les parois latérales et la paroi supérieure ont des parties inclinées pour résister à toute déformation.

8. Jerrycan selon l'une quelconque des revendications précédentes, dans lequel le moyen permettant d'établir une pression différentielle comporte une pompe.

9. Jerrycan selon la revendication 8, dans lequel la pompe est amovible afin de faciliter le remplissage du logement de contenant.

10. Jerrycan selon l'une quelconque des revendications 1 à 7, dans lequel le contenant comporte une soupape de pression à des fins de raccordement sur une source séparée de gaz sous pression.

11. Jerrycan selon l'une quelconque des revendications précédentes, comportant par ailleurs un régulateur de pression.

12. Jerrycan selon l'une quelconque des revendications précédentes, dans lequel la vanne de sortie comporte un robinet.

13. Jerrycan selon la revendication 12, dans lequel le robinet a un bec externe qui est incliné vers le bas pour promouvoir l'écoulement de toute eau restant dans le bec après la fermeture du robinet.

14. Jerrycan selon l'une quelconque des revendications précédentes, dans lequel le filtre à eau est adapté pour retirer toutes les particules ayant une grosseur supérieure à 0,01 microns, et de préférence supérieure à 0,001 microns.

15. Jerrycan selon l'une quelconque des revendications précédentes, dans lequel le filtre à eau comporte au moins une membrane hydrophile,
de préférence dans lequel ladite au moins une membrane est une membrane capillaire à fibres creuses,
de préférence dans lequel le filtre repose sensiblement sur toute la profondeur du logement de contenant, pour ainsi assurer que toute eau est en contact avec les membranes quand le logement est dans une position verticale,
et de préférence dans lequel le filtre à eau est une cartouche amovible.
